# EUROPEAN PATENT APPLICATION

(11) **EP 2 852 149 A1**
(43) Date of publication of application: **25.03.2015**
(21) Application number: 13306283.6
(22) Date of filing: 20.09.2013
(51) Int. Cl.: H04N 5/232, G06T 5/00, H04N 13/00

(54) **Method and apparatus for generation, processing and delivery of 3D video**

(71) Applicant: ALCATEL LUCENT, 92100 Boulogne-Billancourt (FR)
(72) Inventor: Kozicki, Bartlomiej, 2018 Antwerpen (BE); Timmers, Michael, 2018 Antwerpen (BE); Rondao Alface, Patrice, 2018 Antwerpen (BE)
(74) Representative: ALU Antw Patent Attorneys

(57) **Abstract**

A method for generation and transmission of 3D video information (V; Vl,...,Vm) to at least one user (U; ul, .., un), comprises the steps of :
- capturing the 3D video information with a plenoptic camera, thereby generating 3D light-field video information (V; Vl,...,Vm),
- transmitting the 3D light-field video information to said at least one user (U; ul,..., un)
- detecting at least one respective user focus view information (UVI; uvil, ..., uvin) of said at least one user (ul,...,un) watching frames of the 3D light-field video information,
- adapting , for said at least one user, further frames of the 3D light-field video information in accordance with the at least one respective user focus view information (UVI; uvi, ..., uvn) to generate at least one user-specific 3D video (V'; Vl', ..., Vm') for further display to said at least one user.

Devices for performing this method are disclosed as well.

## Description

The present invention relates to a method for three-dimensional, which hereafter will be abbreviated by 3D, video end-to-end generation, processing, and delivery, e.g. for use in IPTV systems.

Until now, widespread adoption of 3D television has been shown to be hindered by visual fatigue caused by viewing of 3D moving images.

It is therefore an object of embodiments of the present invention to provide a solution for the problem of viewer fatigue experienced while watching 3D moving images.

This object is achieved by embodiments of a method for generation and transmission of 3D video information to at least one user, said method comprising the steps of :
- capturing the 3D video information with a plenoptic camera, thereby generating 3D light field video information,
- transmitting the 3D light field video information to said at least one user,
- detecting at least one respective user focus view information of said at least one user watching frames of the 3D light field video information,
- adapting , for said at least one user, further frames of the 3D light field video information in accordance with the at least one respective user focus view information to generate at least one user-specific 3D video for further display to said at least one user.

In this way, by detecting the user focus, e.g. via eye gaze detection techniques, and by adapting the next frames of the 3D video, for taking into account this user's focus view information, the focus of the image in a frame is adapted to the focus of the viewer.

In view of a typical eye focus adaptation time in the region of 300 milliseconds or higher, while a frame duration is only 40 milliseconds, the frame-to-frame delay is small enough to deliver a natural experience for the end-user.

This adaptation is possible as the video is recorded using one or more plenoptic cameras, also denoted as light-field cameras. Such camera uses a microlens array to capture 4D light-field information about a scene. This 4D light-field information can be considered as comprising the set of light rays at every point in a scene in every direction. In practice, only a subset of the 4D light-field is captured; each microlens captures rays at a given focal distance range corresponding to a given depth in a given light ray direction range. Recombining, e.g. by calibrating and processing the content captured by each microlens, enables the reconstruction of the light-field observed from the viewpoint of the camera.

So compared to a usual camera that has only one lens and focal distance and light ray direction, several depths, several focal distances, several disparities and several directions are thus captured and recorded. This allows to easily adapt to the user focus tracked depth view.

In an embodiment the adaptation takes place within a respective end-user video receiving device pertaining to said at least one user.

This can e.g. be the case for a user-generated light-field video which this user wants to display at his own premises. The end-user video receiving device can then be a smart television, a smart projector or the like.

In an embodiment the at least one respective user focus view information of said at least one user is generated by at least one respective end-user detection device in the proximity of said user, and provided by said at least one end-user detection device to an access node of a communications network, and wherein the video adaptation takes place within said access node remote from said at least one respective end-user detection device.

Such an end-user detection device can be e.g. a camera registering the eye movement of the end-user while watching the displayed frames and providing this information to an analysis device also part of the end-user detection device. However, this analysis device can also be physically part of the end-user video receiving device or of the video adaptation device itself.

In a further embodiment the adaptation of said further frames comprises selecting elements in the focal plane of said further frames in accordance with said at least one respective user focus view information and by blurring other elements not in the focal plane.

This can be further realized by an earlier step of extracting depth information and identifying picture zones in frames of said 3D light-field video information and providing said depth information and picture zones information such that selecting elements of the focal plane of said further frames are based on said depth information and identified picture zones .

In yet a further embodiment the method comprises a step of adjusting the binocular disparity. Indeed, for a desired baseline, disparity is inversely proportional to the said extracted depth at said identified picture zones and proportional to said focal plane distance in said 3D light-field video. Selecting a different focal distance for some picture zones, modifies the disparity and/or the depth perception. Adjusting the disparity is then done by solving an optimization problem, which maximizes the depth perception quality by selecting focal distances for parts of the frame that are subject to scene context constraints. For example, the selected focal distance of parts corresponding to the same object should be constant or should vary smoothly; the objects being segmented from the 3D light-field data by well-known image processing and computer vision techniques for object detection in color images or in texture plus depth images.

The present invention relates as well to embodiments of a video adaptation device adapted to receive 3D light-field video information captured by a plenoptic camera, said video adaptation device being further adapted to receive at least one respective user focus view information from at least one respective end-user detection device in the proximity of at least one respective user watching frames of said 3D light-field video information, said video adaptation device being further adapted to adapt, for said at least one user frames of the 3D light-field video information in accordance with the at least one respective user focus view information to thereby generate at least one user-specific 3D video for further display to said at least one user.

In an embodiment the video adaptation device is further adapted to receive and adapt said further frames by selecting elements of the focal plane of said further frames in accordance with said at least one respective user focus view information and by blurring other elements not in the focal plane.

The present invention relates as well to embodiments of an end-user video receiving device comprising such a video adaptation device and wherein said end-user video receiving device can be one of the following devices : a smartphone, a personal computer, a gaming console, a smart television, a projector .

Alternatively the present invention relates as well to embodiments of an access node communicatively coupled to at least one respective end-user video receiving device in the proximity of at least one respective user watching frames of 3D light-field video information, whereby this access node comprises such a video adaptation device.

Such an access node can also be coupled to a plurality of users, and is usually equipped with enough processing power for performing the video processing of all these users. Such a solution can therefore be attractive for service providers, as it allows their clients to use cheaper end-user devices, while still offering them high-quality 3D television, tailored to the individual client's needs, in this case being the respective user focus view information.

In such configuration embodiments of such an access node being coupled to a first plurality of respective end-user video receiving devices pertaining to an associated first plurality of users, and to a video storage server, said access node being adapted to receive from said video storage server a second plurality of light-field video information channels, said access node further comprising selection means for receiving from said at least one respective user of said plurality of users at least one respective user channel selection signal and to select thereupon one of said light-field video information channels requested by said at least one respective user and to provide said selected one of said light-field video information channels to said video adaptation device within said access node, said video adaptation device further being adapted to process said selected one of said light-field video information channels in accordance with said at least one respective user focus view information to thereby generate an adapted selected one of said light-field video information channels for provision to said at least one respective user.

In some embodiments the video adaptation device is adapted to receive already further information with respect to the light-field video from an extraction device which is further adapted to receive said 3D light-field video information and to extract depth information and identifying picture zones in frames of said 3D light-field video information and to provide said depth information and picture zones information to said video adaptation device of said video processing device, such that the video adaptation device is adapted to select elements of the focal plane of said further frames based on said depth information and identified picture zones .

This extraction can be performed in a separate network node, or alternatively within the end-user receiving device, or within the access node.

The present invention relates as well to a computer program adapted to perform, when executed, any of the previously explained methods and to a computer readable storage medium comprising instructions to cause a data processing apparatus to carry out method steps according to any of the previously explained methods.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a high-level schematic block scheme of an embodiment of a light-field camera,
Fig. 2 shows a high level embodiment of the method for generating and providing 3D video to one user ,
Fig 3 depict a high-level embodiment of the method for generating m 3D videos which can be provided to n different users,
Fig. 4 shows an high-level alternative of the method of Fig. 3 where all video processing is performed within the network,
Figs. 5a-f depict by means of an example how the focus of a 3D light-field image is adapted to the user focus view information
Figs. 6 shows a network topology wherein an embodiment of the method as shown in Fig. 4 is implemented .

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

All embodiments of the method are based on capturing video by means of a light-field or plenoptic camera. As described by Ren Ng, "light field" is a concept that includes both the position and direction of light propagating in space (see for example U.S. Pat. No. 7,936,392B2). It is related to the ray representation of light, already presented by Michael Faraday. Light energy is conserved as it passes along straight line paths through space. The light energy can be represented in a 4 dimensional space L(u,v,s,t) with an intensity value at each of (u,v) positions within a plane, and at angular rotations (s,t) about each of those axes. This concept is now already used in computer graphics simulations. With the information from a light-field, the rays can be propagated to destinations in other planes. The process of computing the light intensity at another plane and presenting it as if it were imaged on a virtual film is called reconstruction.

The methods described by U.S. Pat. No. 7,936,392 B2, as well as the doctoral thesis by the same author (R. Ng, "Digital light field photography" 2006) are exemplary descriptions of light-field sensor technology, the mathematics for propagation of the light fields, and the practice of image reconstruction techniques using light fields, both of which are hereby incorporated by reference.

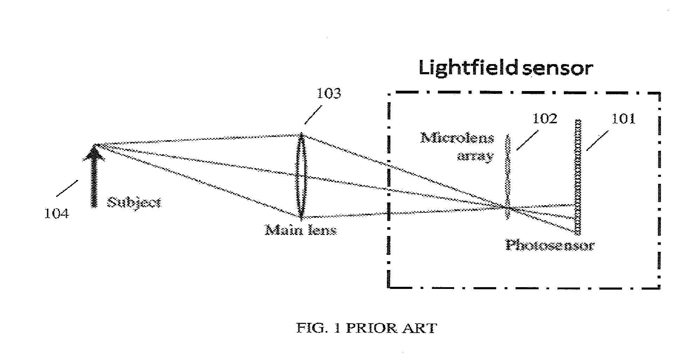

A light-field sensor e.g. for use in a digital focus camera may be achieved by placing a sensor array at or near the back focal plane of a lens array (lenticular array) 102 as illustrated in FIG. 1. This light-field sensor is placed in a supporting assembly containing other optical components such as a main lens 103 to shape and constrain the light from the subject 104 to best fit the light-field sensor geometry. In this way a ray is constrained in position by the individual lens in the array (lenslet) through which it passed, and in angle by the specific sensor pixel it is incident upon behind the lenticular array. Light-field sensors may be created by other means known currently or by other methods which are likely to be devised in the future. One such alternative light-field sensor may use an array of pinholes instead of a lenticular array. Another alternative may place the sensor array at a distance significantly different from the back focal plane of the lenticular array. Such variations may achieve advantages in terms of angular or spatial resolution given a particular sensor or lenticular array spacing. Ren Ng describes properties of generalized light-field sensors in his dissertation work which extend beyond the format of the simple lenticular array placed in front of a sensor array. It is to be understood that all such representations are included when referring to a light-field sensor.

As pointed out in Ren Ng's thesis, the technological capacity to create image sensors with high resolution far exceeds traditional imaging demands. With consumer level commercialization efforts underway for light-field cameras it is reasonable to assume that image sensor technology will evolve to meet demand for megapixel resolutions.

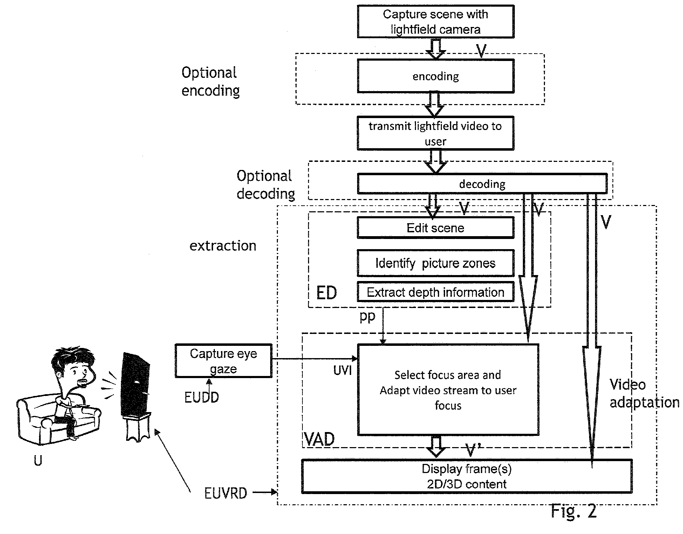

In embodiments according to the present invention, such a light-field camera will thus be used for capturing 3D video. This 3D video is transmitted towards one or more end-users. In fig. 2 an embodiment is shown for only one user to which only one such 3D video is transmitted. The next figures will show embodiments for deployments in broadcast networks.

In fig. 2, the 3D video is thus captured by means of a light-field camera and is transmitted to the end-user U. This transmission can be a transmission over a wireless or wired network, over a long or very short distance, via a direct link or via a lot of intermittent nodes. In the applications envisaged in Fig. 2 the distance usually is very short e.g. the distance between an in-house light-field camera and an end-user video receiving device such as a smart TV or smart display, projector, game console, smart phone etc.. The in-house network can be a wired or wireless in-house network or a combination of both.

This end-user video receiving device is denoted EUVRD. The camera thus generates 3D light-field video information which is subsequently transmitted to EUVRD. In order to meet bandwidth restrictions, the 3D light-field video information V may be compressed, thus encoded before transmission, but this is optional .

After transmission to the user, the video information may be decoded again, if the 3D video was previously encoded. This is followed by 3D processing on the 3D light-field video information, with the aim to adapt the 3D light-field video information stream in accordance to the end-user focus. For detecting this user focus view information, denoted UVI in Fig. 2, the user has to see or watch the 3D video e.g. on a display, and his/her eye focus has to be detected. Detecting the user focus will only be possible after display of the first frame or some initial frames. Nevertheless it is to be expected that the focus of the user will not change significantly over the time period of one frame, such that, for fast video adaptation processing, the user will not experience any harm from this delay by the fact that subsequent frames will be adapted to the user focus detected when the user was watching previous frames.

At the user side subsequent 3D light-field frames are thus received in an end-user video receiving device EUVRD, possibly decoded, and displayed. In

Fig. 2 the end-user video receiving device is, apart from being functionally depicted, also shown by means of an implementation of a smart television. At the user premises, means are also available for detecting and tracking the eye gaze, or the focus of the user with respect to each of these frames, per frame . A device for performing this function is denoted as EUDD, an end-user detection device. There are several existing devices/ techniques which can be used for this purpose, e.g. using a dedicated, visible light or infrared camera to track the position and motion of eye pupils. Alternatively tracking of the location of a modified contact lens remaining in contact with the eye can be employed.

Eye gaze information may thus for instance be obtained by means of a camera comprising an eye gaze detection and analysis module on top of the display of the end-user video receiving device. In other embodiments the eye gaze video information detected by this camera can be further processed by a eye gaze computation module in the end-user receiver itself, or in a remote node within a telecommunication network. In this case the end-user detection device is thus physically distributed over different structural entities.

The resulting information, being the user focus view information signal, UVI, is further provided to a video adaptation device VAD within the end-user video receiving device EUVRD, which video adaptation device will further adapt the received 3D light-field video information V in function of the received user focus view information UVI or eye gaze information signal.

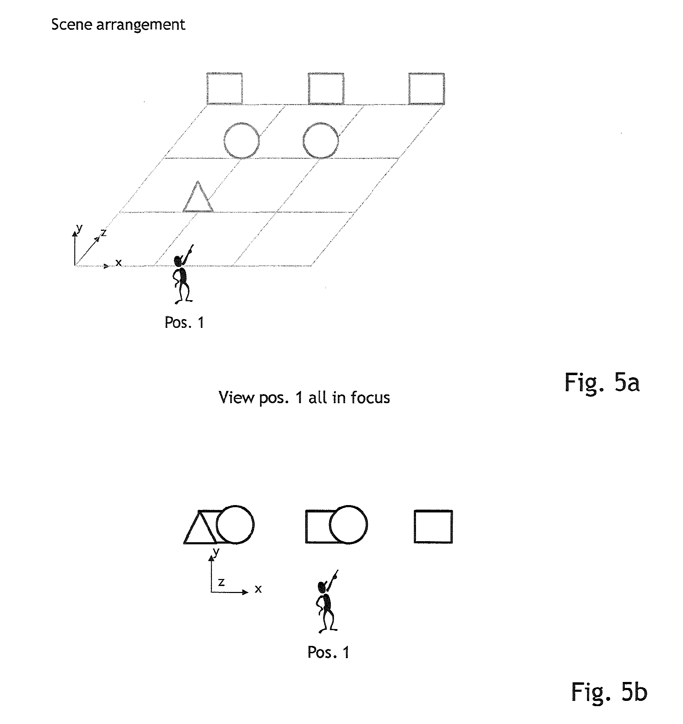

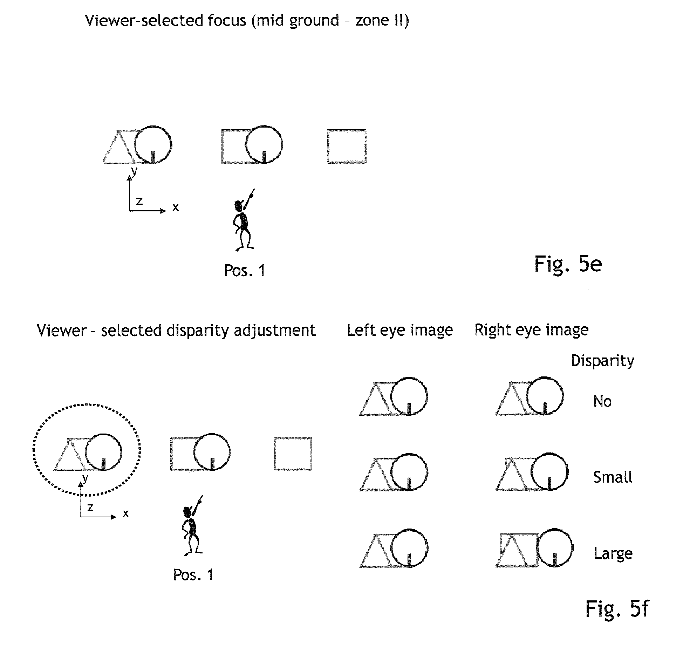

This video adaptation performed by the video adaptation device VAD may comprise following steps, as is also shown in fig. 2, by means of the examples of a scene as depicted in Figs 5a-f.

It is the aim to select the focal plane corresponding to the element of the scene which the video information in the frame is showing, in user's focus. The selected focal plane is thus to be rendered in focus, while to the other possible focus planes blur is applied with an intensity corresponding to the distance from the focal plane of interest.

In the case of stereoscopic images, the binocular disparity can be further adjusted to match the selected depth of focal plane to adjust the disparity to the object in focus, in addition to applying depth-dependent blur.

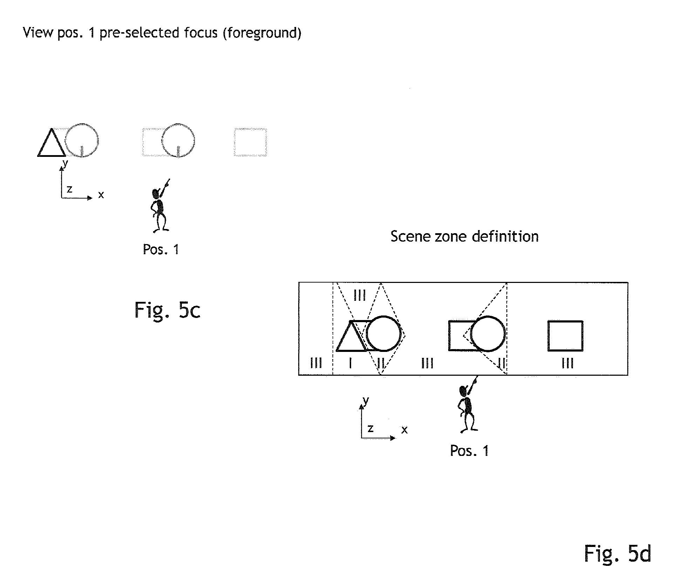

The scene as shown in Figs. 5a-f comprises several geometrical shapes located in three focal planes placed in different distances in z axis from the observer. The scene, together with observer or user located in position 1 is indicated in Fig. 5a. When captured and reproduced in 2D space the image will consist of spatially overlapping shapes. The entire scene is typically in focus, as shown in Fig. 5b. If the scene is reproduced with limited depth of field, typically a single focal plane will be preselected and fixed regardless of viewer's preference as shown in Fig. 5c .

Embodiments of the method of the invention therefore comprise identification of image zones in the image corresponding to the focal planes of the reproduced objects. In the above-mentioned examples the scene is therefore divided into three zones, as illustrated in Fig. 5d. The zones can be described by polygons or by a depth mask. Zone information is calculated from the light-field information. In the illustrated embodiment the user selects zone II and the focal plane is adjusted accordingly, as shown in Fig. 5e.

Similarly, knowing the focus zone (in this case zone II of Fig. 5d) and having access to the light-field information of the captured scene the processing/adaptation algorithm can displace elements of the scene belonging to different zones according to the user-preferred disparity. Indeed, depth being inversely proportional to disparity and proportional to the focal distance, modifying the disparity or the focal distance, directly changes the perception of depth. This perception of depth in the displayed image can be optimized to suit the particular viewer.

Fig. 2 schematically shows these steps as being performed in a light-field video extraction device ED , which is adapted to perform scene editing, picture zone identification and depth extraction. This information is provided as an output signal PP to the video adaptation device which uses this information, and the user focus information UVI, to select from the frames of the incoming 3D light-field video information V, the area in focus within the frame to be adapted. The other parts of the frame are next blurred, with an intensity corresponding to the distance from the focal plane of interest. The depth range may be expressed as a percentage of the distance between the front most and the most distant element of the scene, representing the depth of the scene. Similarly the level of blur may be determined by the distance from the selected focal plane expressed in percentile of total depth. This blur level can indeed either be applied to the non-in-focus parts of the frame by using a Gaussian blur filter, which takes into account the relative depth distance of these non-in-focus parts to the parts in focus (i.e., the standard deviation of the Gaussian filter is locally set proportional to the depth difference) or by selecting for each of these non-in-focus parts from the same or from other focal planes, the focus being determined by the depth difference between this non-in-focus part and the parts in focus. The thus adapted frame is next rendered and displayed, and the user gaze is detected again . As long as the user focuses on a point in the plane of the projection screen so that the focal plane of the scene is selected, that focal plane remains selected until the user's focus shifts to another element in the scene which is located at a different focal plane.

In order to copy with fast focus variations the well-known Kalman Filter may help to smooth the "trajectory" of the eye focus on the projection plane.

The video processing can thus be split in some pre-processing or video extraction part, and the real-video adaptation part. On fig. 2 this is depicted via the presence of two separate modules ED and VAD. Both modules are part of the end-user receiver. However in other embodiments ED can be integrated within VAD. In fig. 2 the resulting adapted video is denoted V'.

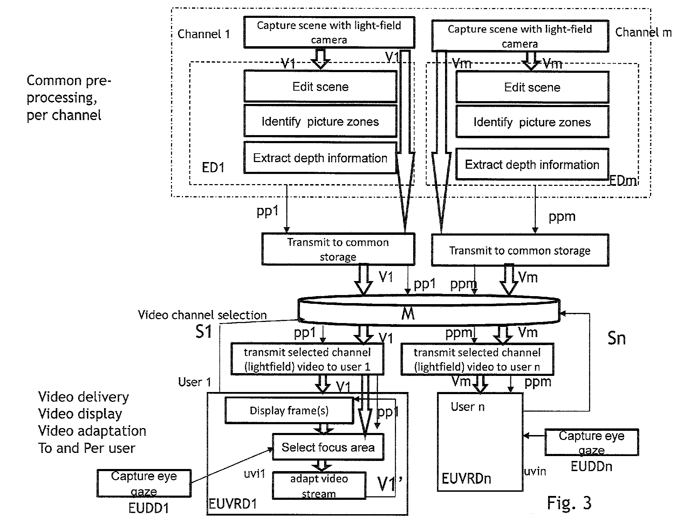

While this embodiment could be useful for in-house camera applications where video is captured by a user using his own lightfield camera, and next displayed e.g. on his own television screen, the techniques as explained in the previous paragraphs also enable more widespread IPTV deployment. Examples of this are for instance shown in fig. 3. Therein m video channels are captured by means of m light-field cameras, and the video extraction comprising the scene editing, picture zone identification, depth extraction, are all performed in the network, either at the video generation site, or at another server. The m channels of 3D light-field video information V1 to Vm are transmitted together with their associated extracted information pp1 to ppm to a common storage server M in the network . This storage server can be part of a video server, or a head end . This video storage server is further adapted to receive from the n users, denoted user 1 to user n, and connected to the video storage server M via their respective end-user video receiving devices EUVRD1 to EUVRDn respective video channel selection requests, denoted S1 to Sn, indicative of the user-requested video channel. Upon receipt of such a selection signal, the video server M starts transmitting or streaming the requested channel, together with the associated extracted information, to the user having requested this channel. In fig. 3 user 1 had requested channel 1, and user n had requested channel m. So V1 and pp1 are provided to EURD1 while Vm, ppm are provided to EURDn.

The selected video channel is thereupon received and displayed to the respective users. The respective end-user focus is as well detected, by means of respective end-user detection devices EUDD1 to EUDDn, which are adapted to provide respective user focus view information signals uvi1 to uvin to the respective video adaptation devices VAD1 to VADn (not shown for sake of clarity in Fig. 3) part of EUVRD1 to EUVRDn and the video is adapted to only select the focus area and to blur the other areas, as explained in the previous paragraphs.

When the scene is displayed using one of the stereoscopic techniques, the identification of focal plane also enables per/viewer adjustment of disparity by further processing the light-field information, leading to more natural and pleasing perception in accordance with the explanation given for a single user as in Fig. 2.

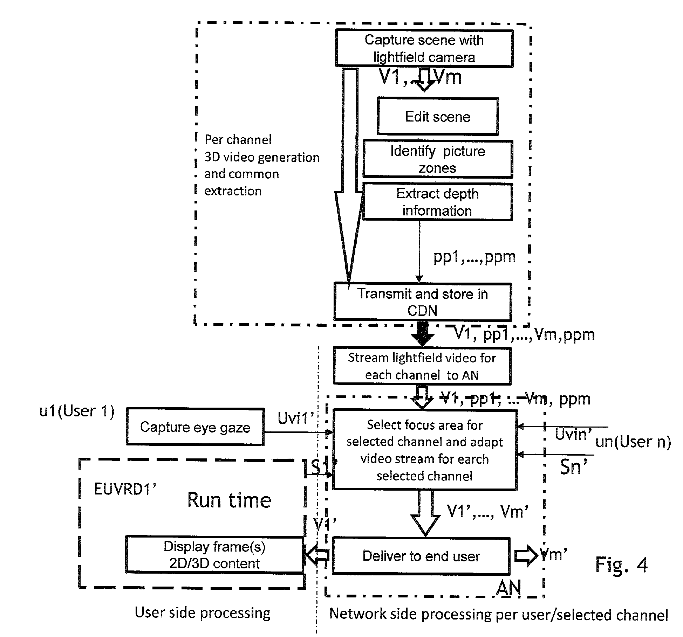

Fig. 4 displays an even more network-centered approach where not only the video pre-processing will be performed within the network, but also the video adaptation. This has as advantage that latency between the processing node and end user is reduced. Another advantage relates to the scalability of the solution. This is of importance for e.g. IPTV applications.

In these situations, to avoid as much delay as possible, the video adaptation is preferably performed in an access node AN, closest to the users. In that case the user selects a channel and continuously provides focus information on this channel to the access node, which thereupon starts the adaptation of the video in response to the user focus. If the user switches from channel, the video adaptation also is to be performed on another selected video, within the access node itself. The access node AN of fig. 4 therefore receives all video information channels V1 to Vm together with extracted information pp1 to ppm, as well as all user channel selection requests S1' to Sn' and user focus view information uvi1' to uvin', and adapts the respective selected light-field video streams. The thus adapted streams are denoted V1' to Vm' and are provided or streamed to the respective end-user video receiving devices EUVRD1' to EUVRDn'. These embodiments of thes end-user video receiving devices are thus simpler compared to these of Fig. 3

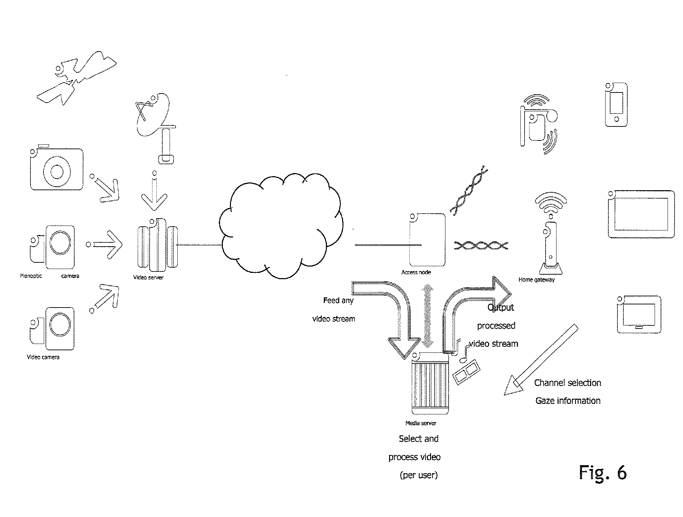

A network wherein such implementation is deployed is depicted in fig. 6, showing a system-wide realization of the above-mentioned method .embodiment. It comprises :
- Capturing the scene with light-field aware camera (monoscopic or stereoscopic)
- Transmission of light-field data to processing stage
- Capturing user view information
- Processing the image to obtain per user projection
- Transmission of processed 2D or 3D image to end user(s)
- Display of scene.

For multiple users observing the same scene, individual and potentially different focal planes are displayed in focus. In the case of stereoscopic capture, the parallax shift can be modified to adjust the binocular disparity to according to viewers' preference. Indeed, for a desired baseline, disparity is inversely proportional to the said extracted depth at said identified picture zones and proportional to said focal plane distance in said 3D light-field video. Selecting a different focal distance for some picture zones, modifies the disparity and/or the depth perception. Adjusting the disparity is then done by solving an optimization problem, which maximizes the depth perception quality by selecting focal distances for parts of the frame that are subject to scene context constraints (for example, the selected focal distance of parts corresponding to the same object should be constant or should vary smoothly; the objects being segmented from the 3D light-field data by well-known image processing and computer vision techniques for object detection in colour images or in texture plus depth images). Doing so, the disparity and depth perception of the 3D scene can be improved and adapted to the user visual preference so as to present the objects of the scene in a way that is better suited for the viewer display capabilities (e.g. in terms of resolution).

This is thus in contrast to existing 3D scene capturing and distribution methods where in the process of generation of such images the focus plane is chosen such that the entire scene is captured in focus, leading to unnaturally looking images. Such 3D video generation further enforces the viewer to view the scene according to this predetermined focal point. Despite the perceived depth, this leads to visual discomfort caused primarily by the following factors :
1. High demand on depth accommodation and eye convergence without sufficient visual clues
2. 3D artifacts stemming from insufficient 3D information
3. Unnatural amounts of blur and binocular disparity.

By using embodiments of the methods and apparatus as described, these problems are thus solved.

While the principles of the invention have been described above in connection with specific apparatus, it is to be clearly understood that this description is made only by way of example and not as a limitation on the scope of the invention, as defined in the appended claims.

## Claims

1. Method for generation and transmission of 3D video information (V; V1,...,Vm) to at least one user (U; u1, .., un) , said method comprising the steps of :
- capturing the 3D video information with a plenoptic camera, thereby generating 3D light-field video information (V; V1,...,Vm),
- transmitting the 3D light-field video information to said at least one user (U; u1,..., un)
- detecting at least one respective user focus view information (UVI; uvi1, ..., uvin) of said at least one user (u1,...,un) watching frames of the 3D light-field video information,
- adapting , for said at least one user, further frames of the 3D light-field video information in accordance with the at least one respective user focus view information (UVI; uvi, ..., uvn) to generate at least one user-specific 3D video (V'; V1', ..., Vm') for further display to said at least one user.

2. Method according to claim 1 wherein the adaptation takes place within a respective end-user video receiving device (EUVRD; EUVRD1,...,EUVRDn) pertaining to said at least one user (U; u1,...,un).

3. Method according to claim 1 wherein the at least one respective user focus view information (UVI; uvi1, ..., uvin) of said at least one user (U; u1,...,un) is generated by at least one respective end-user detection device (EUDD; EUDD1,...,EUDDn) in the proximity of said user, and provided by said at least one end-user detection device (EUDD; EUDD1,...,EUDDn) to an access node (AN) of a communications network used for the transmission of said 3D video information , and wherein the video adaptation takes place within said access node remote from said at least one respective end-user detection device (EUDD; EUDD1,...,EUDDn).

4. Method according to any of the previous claims 1-3, wherein said adaptation of said further frames comprises selecting elements in the focal plane of said further frames in accordance with said at least one respective user focus view information (UVI; uvi1, ..., uvin) and by blurring other elements not in the focal plane.

5. Method according to claim 4 further comprising extracting depth information and identifying picture zones in frames of said 3D light-field video information and providing said depth information and picture zones information such that selecting elements of the focal plane of said further frames are based on said depth information and identified picture zones .

6. Method according to any of the previous claims 1-5 further comprising a step of adjusting the binocular disparity of said extracted depth information and identified picture zones in frames of said 3D light-field video information by modifying the selection of said focal plane of said picture zones according to the user focus view information.

7. Video adaptation device (VAD) adapted to receive 3D light-field video information (V; V1,..,Vm) captured by a plenoptic camera, said video adaptation device (VAD) being further adapted to receive at least one respective user focus view information (UVI; uvi1, ..., uvin) from at least one respective end-user detection device (EUDD; EUDD1,...,EUDDn) in the proximity of at least one respective user (U; u1,...,un) watching frames of said 3D light-field video information, said video adaptation device (VAD) being further adapted to adapt, for said at least one user (U; u1,...,un), frames of the 3D light-field video information (V; V1,...,Vm) in accordance with the at least one respective user focus view information (UVI; uvi, ..., uvn) to thereby generate at least one user-specific 3D video (V'; V1', ..., Vm') for further display to said at least one user.

8. Video adaptation device (VAD) according to claim 7, said video adaptation device being adapted to receive and adapt said further frames by selecting elements of the focal plane of said further frames in accordance with said at least one respective user focus view information (UVI; uvi1, ..., uvin) and by blurring other elements not in the focal plane.

9. End-user video receiving device (EUVRD; EUVRD1,..,EUVRDn) comprising a video adaptation device (VAD) according to claim 7 or 8, and wherein said end-user video receiving device (EUVRD; EUVRD1,...,EUVRDn) device is one of the following devices : a smartphone, a personal computer, a gaming console, a smart television, a projector .

10. Access node communicatively coupled to at least one respective end-user video receiving device (EUVRD; EUVRD1,..,EUVRDn) in the proximity of at least one respective user (U; u1,...,un) watching frames of 3D light-field video information, said access node (AN) comprising a video adaptation device (VAD) according to claim 7 or 8.

11. Access node (AN) according to claim 10 further being coupled to a first plurality of respective end-user video receiving devices (EUVRD1,..,EUVRDn) pertaining to an associated first plurality of users (u1',...,un'), and to a video storage server (M), said access node (AN) being adapted to receive from said video storage server (M) a second plurality of light-field video information channels (V1,...,Vm), said access node further comprising selection means for receiving from said at least one respective user of said plurality of users at least one respective user channel selection signal (S1',...,Sn') and to select thereupon respective ones (V1,...,Vm) of said light-field video information channels requested by said at least one respective user (u1',..,un') and to provide said selected one of said light-field video information channels to said video adaptation device (VAD) within said access node, said video adaptation device (VAD) further being adapted to process said selected on of said light-field video information channels in accordance with said at least one respective user focus view information (uvi1', ..., uvin') to thereby generate respective adapted selected said light-field video information channels (V1',...,Vm') for provision to said at least one respective user (u1',..,un').

12. Extraction device (ED) for being coupled to a video adaptation device according to claim 8, said extraction device (ED) being adapted to receive said 3D light-field video information (V) and to extract depth information and identifying picture zones in frames of said 3D light-field video information and for providing said depth information and picture zones information to said video adaptation device (VAD), such that the video adaptation device is adapted to select elements of the focal plane of said further frames based on said depth information and identified picture zones .

13. A computer program adapted to perform, when executed, any of the methods in accordance with any of the claims 1 to 6.

14. A computer readable storage medium comprising instructions to cause a data processing apparatus to carry out method steps according to any of the previous claims 1-6
